# EUROPEAN PATENT SPECIFICATION

(11) **EP 4 186 349 B1**
(45) Date of publication and mention of the grant of the patent: **04.09.2024**
(21) Application number: 22208979.9
(22) Date of filing: 23.11.2022
(51) Int. Cl.: A01D 34/78, A01D 69/02, H01M 10/6563, H01M 10/613, H01M 10/625

(54) **ELECTRIC-TYPE LAWN MOWER WITH BATTERY COOLING APPARATUS**
ELEKTRISCHER RASENMÄHER MIT BATTERIEKÜHLVORRICHTUNG
TONDEUSE À GAZON DE TYPE ÉLECTRIQUE AVEC APPAREIL DE REFROIDISSEMENT DE BATTERIE

(30) Priority: 26.11.2021 IT 202100029921
(43) Date of publication of application: 31.05.2023
(73) Proprietor: Stiga S.p.A. in breve anche St. S.p.A., 31033 Castelfranco Veneto (TV) (IT)
(72) Inventor: ZONTA, Mr. Paolo, 31033 B.go Treviso, 183 - CASTELFRANCO VENETO (TV) (IT)
(74) Representative: Mittler, Andrea

(56) References cited:
- EP-A1- 3 561 901
- WO-A1-2013/139409
- CN-U- 206 422 108

## Description

The present invention relates to an electric-type lawn mower with a battery cooling apparatus.

Lawn mowers provided with an electric motor for moving one or more grass cutting blades and an electric motor for moving the lawn mower are known from the prior art; said electric motors are usually controlled by a single control unit and powered by a battery pack.

The battery pack of the current lawn mowers is mostly arranged in the rear part of the lawn mower so as to be easily recharged by a power socket outside the lawn mower.

In certain lawn mowers, it is also possible that the batteries can be removed for their replacement. EP 3714679 describes a lawn mower provided with a battery pack mounted to the central chassis in the rear part of the lawn mower. Some of the batteries of the battery pack are removable and are usable to electrically power another tool.

However, the arrangement of the batteries in the central part results in a certain inconvenience for the lawn mower user when removing them.

The batteries used to electrically power the lawn mower are further subject to heating, and excessive heating can cause damage to the batteries themselves and to the lawn mower.

In order to avoid this, the electric-type lawn mowers currently used are provided with a fan for cooling all the batteries; however, the use of one fan alone does not allow an effective cooling of all the batteries.

EP-3561901 describes a lawn mower provided with at least one grass cutting blade moved by an electric motor and a traction device, a battery pack and a battery pack support.

In view of the prior art, it is the object of the present invention to provide an electric-type lawn mower that is different from those known.

According to the present invention, said object is achieved by a lawn mower provided with at least one grass cutting blade moved by an electric motor and a traction device comprising a further electric motor, said lawn mower comprising a power supply device for said electric motors comprising at least one battery pack and an apparatus for cooling said at least one battery pack, characterized in that said cooling apparatus comprises
- at least one support for said at least one battery pack comprising a compartment able to accommodate said battery pack, said compartment comprising a cavity on the bottom not occupied by the battery pack when the battery pack is inserted into the support, said battery pack comprising related slots on the bottom,
- at least one container able to accommodate said at least one battery pack support, said container being closed by a door comprising slots for the air to enter into said at least one battery pack support and the container;
- at least one fan for each battery pack support able to suck in incoming air from the slots of said door and circulating inside the battery pack through said cavity and the related slots on the bottom of the battery pack.

The features and advantages of the present invention will become apparent from the following detailed description of a practical embodiment thereof, disclosed by way of non-limiting example in the accompanying drawings, in which:
Figure 1 is a perspective view of a lawn mower according to the present invention;
Figure 2 is a side view of the lawn mower of Figure 1;
Figure 3 is a top view of the lawn mower of Figure 1;
Figure 4 is a sectional view of the lawn mower of Figure 1;
Figure 5 is an exploded view of the battery containment apparatus;
Figure 6 is a front view of a part of the apparatus of Figure 5, with closed door;
Figure 7 is a front view of the apparatus of Figure 6, with open door;
Figure 8 is a sectional view along line VIII-VIII, of the apparatus of Figure 6;
Figure 9 is a perspective view of a part of the apparatus of Figure 8;
Figures 10 and 11 are sectional views along lines X-X and XI-XI, of the apparatus of Figure 8 with closed door;
Figure 12 is a sectional view along line XII-XII, of the apparatus of Figure 8;
Figure 13 is a view of the battery pack used in the apparatus of Figure 7;
Figure 14 is a front view of the lawn mower of Figure 1;
Figure 15 is a bottom view of the battery pack of Figure 13;
Figure 16 is a sectional view along line XVI-XVI, of the battery pack of Figure 15;
Figure 17 shows a sectional view similar to that of Figure 11, but with the battery pack inserted and the door open;
Figures 18 and 19 diagrammatically show the flow of air in the battery pack arranged in the apparatus of Figure 7.

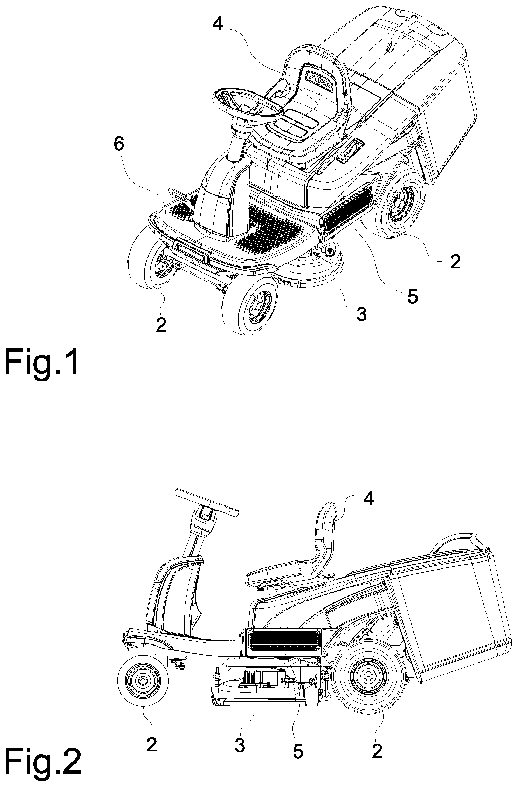

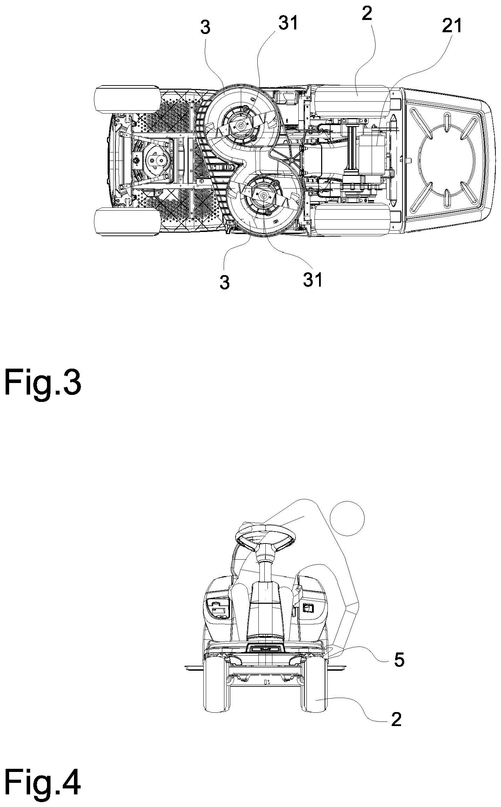

Figures 1-4 show a lawn mower 1 according to the present invention. The lawn mower is of the electric type, i.e., it does not have heat engines, and comprises at least one cutting blade 3, diagrammatically shown in the figures, moved by an electric motor 31, and a traction device for moving the wheels 2 comprising a further electric motor 21; the electric motors are powered by a battery power supply apparatus 5 arranged below the seat 4 of lawn mower 1 and supported by a chassis 6 of the lawn mower. A control unit, not shown in the figures, for managing said electric motors 31 and 21 is preferably provided.

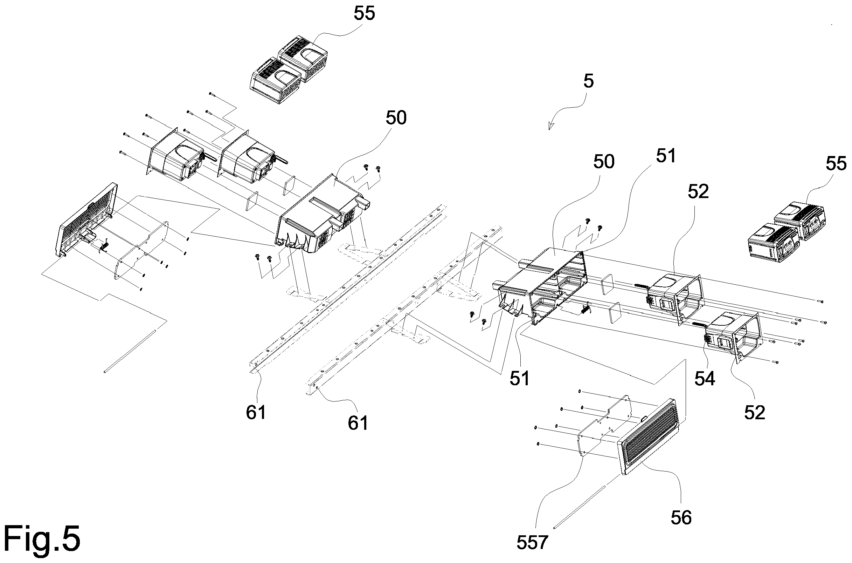

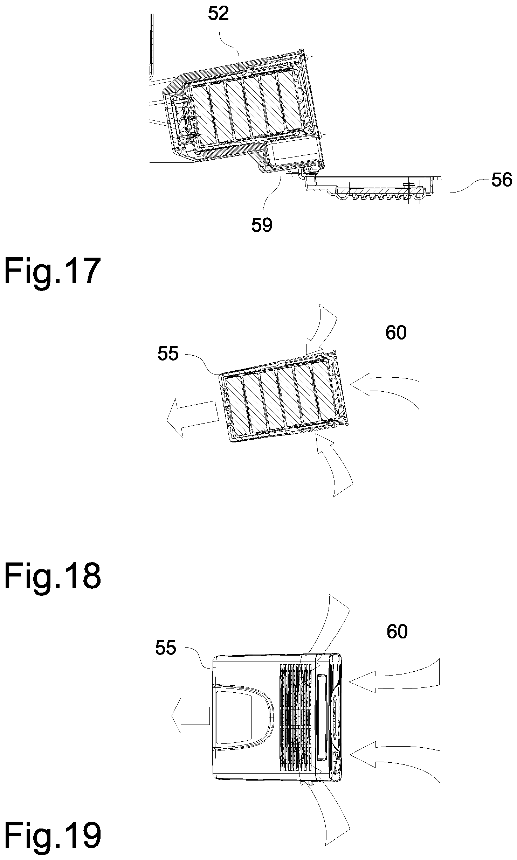

As better seen in Figures 5-19, the battery power supply apparatus 5 comprises at least one battery container 50 fixed to a longitudinal bar 61 of the chassis 6 of the lawn mower, but preferably a pair of battery containers 50 fixed to a pair of longitudinal bars 61 of the chassis 6 of the lawn mower.

As better seen in Figure 5, each container 50 comprises at least one compartment 51, but preferably two compartments 51, for accommodating a pair of battery supports 52. Preferably, a filter 53 is arranged in the rear part of each compartment 52, which thus is between the rear walls of the compartment 51 and of the battery support 52; filter 53 is able to filter the air from the battery support 52.

Each battery support 52 comprises a fan 54 arranged in the rear wall of the battery support 52 and able to suck in the air present in the support 52.

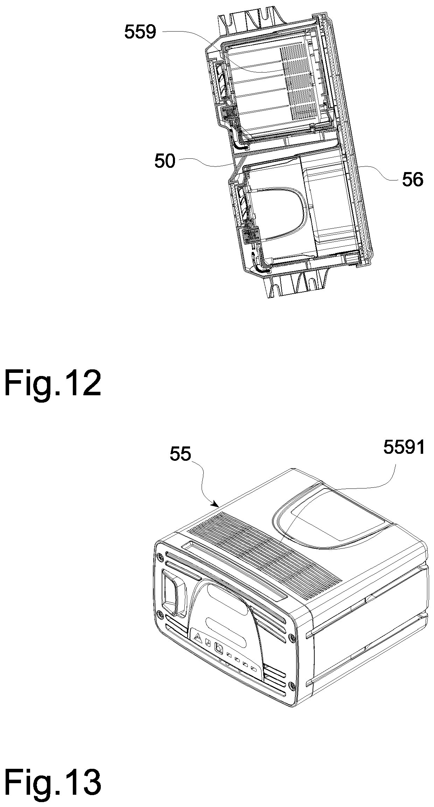

Each battery support 52 comprises a compartment able to accommodate a battery pack 55 (Figures 13, 15-17) therein, e.g., lithium batteries with high amperage to allow the suitable power supply of the motor for moving the lawn mower (not seen in the figures) and at least one cutting blade 3, and to power the control and display devices as well as all the other typical devices of a current lawn mower.

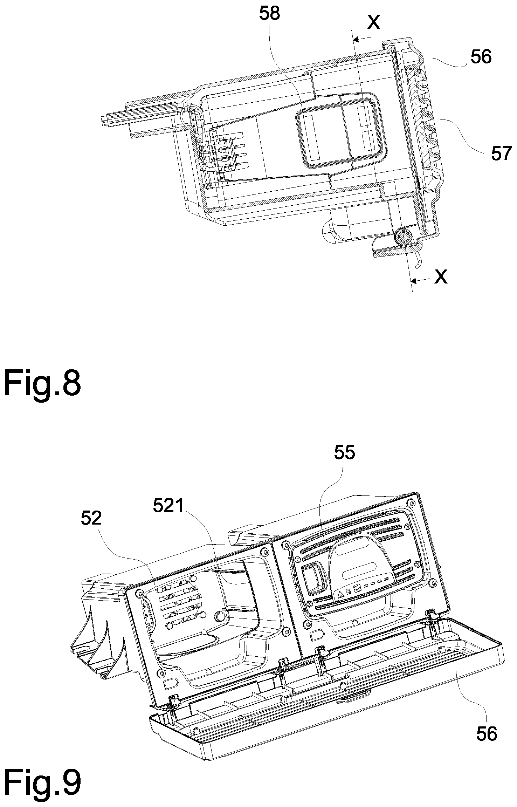

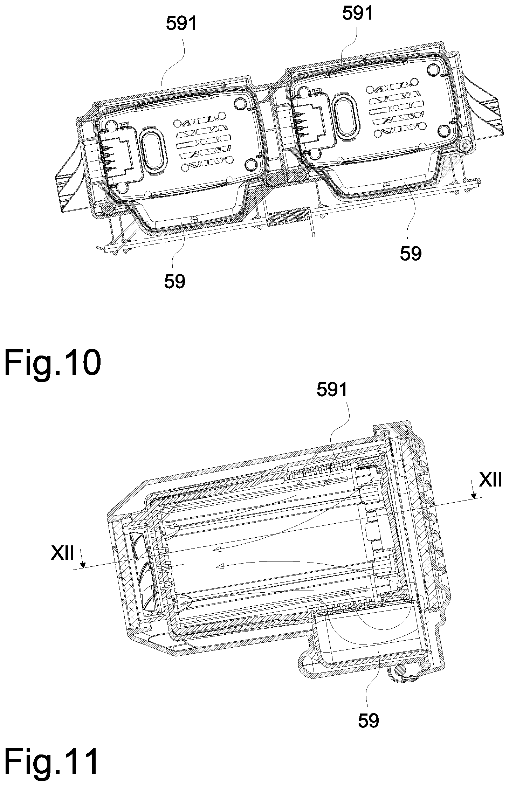

The supports 52 are completely insertable into the compartments 51 of container 50 and each battery pack 55 is completely inserted into the support 52 so that the rear part thereof is adjacent to the rear wall of support 52 where the fan 54 is fixed, as better seen in Figures 9 and 11.

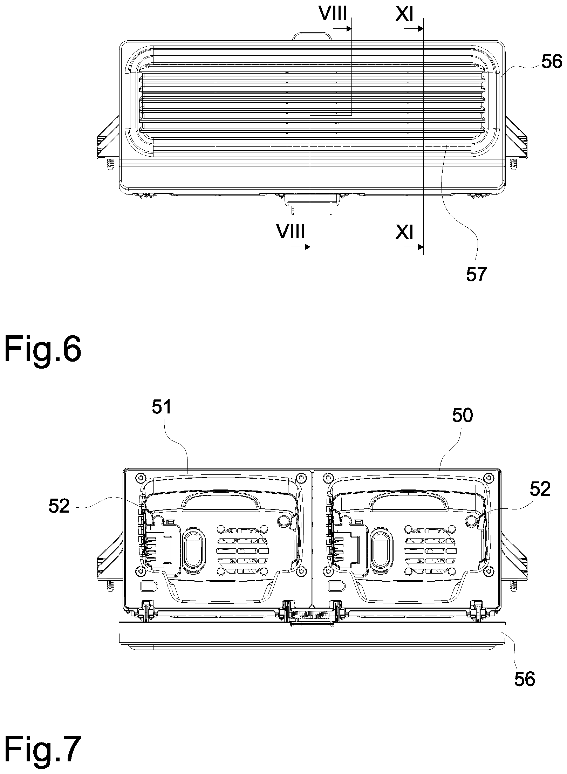

Each container 50 is then closed by a door 56 hinged to the bottom wall of container 50 and easily openable by pressure on the door 56 itself, as better seen in Figures 6 and 7.

The lawn mower 1 is provided with a particular cooling apparatus 100 for the batteries, which comprises elements already mentioned above. Each fan 54 of each support 52 sucks in air from the outside through the slots 57 of the door 56 of container 50, thus creating a flow of air 60 inside the battery power supply apparatus 5. The air sucked in by fan 54 crosses the support 52 accommodating the battery pack 55 to cool it by ambient air from the outside, as seen in Figures 11, 18, and 19. The air from the slots 57 is cleaner than the air from the part of the lawn mower where there is the cutting blade 3.

For an improved cooling of the battery pack 55, each support 52 is provided with a cavity 59 on the bottom of the support, not occupied by the battery pack when the battery pack 55 is inserted into the support, able to convey the air from the outside through the slots 57 of door 56 and sucked in by fan 54 towards the bottom of the battery pack 55, as better seen in Figures 7-10. The bottom of the battery pack 55 has slots 559 allowing the flow of air 60 to enter into the battery pack 55 and cool the batteries, as better seen in Figures 12, 15-17.

Preferably, each support 52 is provided with a cavity 591 on the top of the support, not occupied by the battery pack when the battery pack is inserted into the support, able to convey the air from the outside through the slots 57 of door 56 and sucked in by fan 54 towards the top of the battery pack 55. The top of the battery pack 55 has slots 5591 allowing the flow of air 60 to enter into the battery pack 55 and cool the batteries.

For an even more improved cooling of the battery pack 55, each support 52 is provided with side windows 58 able to convey the air from the gap created between the compartments 52 and the container 50 towards the side walls of the battery pack 55.

In each support 52, a step 521 is provided in the side walls of support 52, as better seen in Figure 9; said step 521 causes a longitudinal staggering of the side walls so as to determine a smaller rear compartment and a larger front compartment in the entry direction of the battery pack 55. When the battery pack 55 is arranged inside the compartment 52, the presence of step 521 allows maximizing the flow of air entering through the slots of door 56 since the front compartment is not completely occupied by the battery pack 55

The flow of air 60 from the outside through the slots 57 of door 56 enters into the battery pack 55 for an improved cooling of the batteries or cells 551 preferably arranged in the central part of the battery pack 55.

In order to have an incoming cleaner flow of air 60 from the slots 57 of door 56, a filter 557 is arranged adjacent to the inner part of door 56 being able to filter the ambient air entering into the support 52 from dust or other external substances.

The air sucked in by fan 54 is then discharged outside after crossing the filter 54. The arrangement of a double containment compartment of the battery pack 55, given by the compartment 51 of container 50 and the support 52, allows an improved flow of air inside container 50 for cooling the battery pack 55 since a gap is created between the compartments 51 and the supports 52, which promotes the flow of air towards the battery pack 55 through the side windows 58.

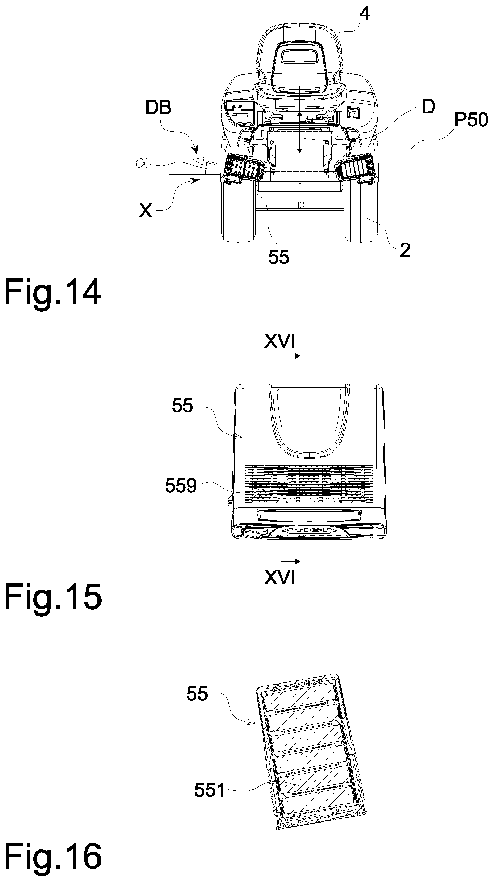

The arrangement of the containers 50 in the lawn mower is inclined with respect to an axis X, which is parallel to the axis of the wheels 2 of the lawn mower, as better seen in Figure 14. Indeed, the containers 50 are fixed on the chassis 6 of the lawn mower below seat 4 and so that the extraction direction DB of the battery packs 55 forms an angle α with axis X between 5° and 45°, preferably an angle of 10°. The extraction direction DB of the battery packs 55 is always above axis X.

Moreover, each container 50 is arranged below seat 4 but so as to protrude from the vertical profile of seat 4 to facilitate the replacement of the battery packs 55 by the operator seated on the seat 4 itself.

The containers 50 are preferably arranged halfway over the length of lawn mower 1. The containers 50 are preferably arranged at a given distance D from the seat, preferably between 250 mm and 300 mm, but even more preferably of 288 mm, such as to allow the lawn mower user to remove the battery pack 55 while seating on the seat 4 of the lawn mower; thereby, opening the door 56 of each container 50 becomes easier and removing the battery pack 55 for possible replacement or the like becomes easier. Distance D is the distance between the lower part of seat 4 and the transverse plane P50 passing through the top of container 50.

## Claims

1. Lawn mower comprising at least one grass cutting blade (3) moved by an electric motor (31) and a traction device comprising an additional electric motor (21), said lawn mower further comprising a power supply device (5) for such electric motors comprising at least one battery pack (55) and one apparatus (100) for cooling said at least one battery pack, **characterized in that** said cooling apparatus includes:
- at least one support (52) for said at least one battery pack comprising a compartment suitable for a battery pack, said compartment comprising a cavity (59) on the bottom not occupied by the battery pack when the battery pack is inserted into the compartment, said battery pack including relative slots (559) on the bottom,
- at least one container (50) able to receive at least one battery pack support, said container being closed by a door (56) comprising slots (57) for the ingress of air into said battery pack support and the container,
- at least one fan (54) for each battery pack support able to suck in air from the slots of said door and so as to flow inside the battery pack through said cavity and the relative slots at the bottom of the battery pack.

2. Lawn mower according to claim 1, **characterized in that** said at least one support of a battery pack includes a further cavity (591) on the top not occupied by the battery pack when the battery pack is inserted into the support, said battery pack including relative slots (5991) on the top for the flow of air sucked by said fan inside the battery pack through said further cavity and the relative slots on the top of the battery pack..

3. Lawn mowerT according to claim 1, **characterized in that** said at least one support of a battery pack includes at least one side opening (58), said at least one support of a battery pack and said container forming a gap between them, said gap being suitable for conveying the flow of air (60) sucked by that fan to that battery pack through said at least one side opening.

4. Lawn mower according to claim 1, **characterized in that** said at least one support of a battery pack includes a step (521) in the side walls of the support (52) capable of causing a longitudinal staggering of the side walls so as to determine a smaller rear compartment and a larger front compartment in the entry direction of the battery pack (55).

5. Lawn mower according to claim 1, **characterized by** comprising a filter (557) configured to filter the incoming air from the slots of said door.

6. Lawn mower according to claim 1, **characterized by** comprising a chassis (6) and a seat (4) and said at least one container (50) being placed below that seat and being attached to the chassis of the lawn mower tractor so that the direction of extraction (DB) of at least one battery pack is inclined at a given angle (α) with respect to an axis (X) parallel to the axis of rotation of the wheels (2) of the lawn mower tractor.

7. Lawn mower according to claim 6, **characterized in that** said given angle is comprised between 5° and 45°.

8. Lawn mower according to claim 6, **characterized in that** said given angle is of 10°.

9. Lawn mower according to claim 6, **characterized in that** said at least one container is placed below the seat (4) in such a way as to escape from the vertical profile of the seat (4).

10. Lawn mower according to claim 6, **characterized in that** said at least one container is placed at a given distance (D) from the seat (4), said given distance being such as to enable the user of the lawn mower tractor to remove that battery pack while sitting on said tractor seat.

## Patentansprüche

1. Rasenmäher, der mindestens eine von einem Elektromotor (31) bewegte Grasschneideklinge (3) und eine Zugvorrichtung mit einem zusätzlichen Elektromotor (21) aufweist, wobei der Rasenmäher ferner eine Energieversorgungsvorrichtung (5) für solche Elektromotoren aufweist, die mindestens ein Batteriepack (55) und eine Vorrichtung (100) zum Kühlen des mindestens einen Batteriepacks aufweist, **dadurch gekennzeichnet, dass** die Kühlvorrichtung aufweist:
- mindestens eine Halterung (52) für das mindestens eine Batteriepack, die ein für ein Batteriepack geeignetes Fach aufweist, wobei das Fach einen Hohlraum (59) auf der Unterseite aufweist, der nicht von dem Batteriepack belegt ist, wenn das Batteriepack in das Fach eingesetzt ist, wobei das Batteriepack relative Schlitze (559) auf der Unterseite aufweist,
- mindestens einen Behälter (50), der mindestens eine Batteriepackhalterung aufnehmen kann, wobei der Behälter durch eine Klappe (56) verschlossen wird, die Schlitze (57) für den Eintritt von Luft in die Batteriepackhalterung und den Behälter aufweist,
- mindestens ein Gebläse (54) für jede Batteriepackhalterung, das Luft aus den Schlitzen der Klappe ansaugen kann, sodass diese im Inneren des Batteriepacks durch den Hohlraum und die relativen Schlitze auf der Unterseite des Batteriepacks strömt.

2. Rasenmäher nach Anspruch 1, **dadurch gekennzeichnet, dass** die mindestens eine Halterung eines Batteriepacks einen weiteren Hohlraum (591) auf der Oberseite aufweist, der nicht von dem Batteriepack belegt ist, wenn das Batteriepack in die Halterung eingesetzt ist, wobei das Batteriepack relative Schlitze (5991) auf der Oberseite für den Luftstrom, der von dem Gebläse in des Innere des Batteriepacks angesaugt wird, durch den weiteren Hohlraum und die relativen Schlitze auf der Oberseite des Batteriepacks aufweist.

3. Rasenmäher nach Anspruch 1, **dadurch gekennzeichnet, dass** die mindestens eine Halterung eines Batteriepacks mindestens eine seitliche Öffnung (58) aufweist, wobei die mindestens eine Halterung eines Batteriepacks und der Behälter dazwischen einen Spalt bilden, der dazu geeignet ist, den von dem Gebläse angesaugten Luftstrom (60) durch die mindestens eine seitliche Öffnung zu dem Batteriepack zu leiten.

4. Rasenmäher nach Anspruch 1, **dadurch gekennzeichnet, dass** die mindestens eine Halterung eines Batteriepacks eine Stufe (521) in den Seitenwänden der Halterung (52) aufweist, die eine Längsversetzung der Seitenwände bewirken kann, um ein kleineres hinteres Fach und ein größeres vorderes Fach in der Einsatzrichtung des Batteriepacks (55) zu bestimmen.

5. Rasenmäher nach Anspruch 1, **dadurch gekennzeichnet, dass** er einen Filter (557) aufweist, der dazu ausgelegt ist, die aus den Schlitzen der Klappe einströmende Luft zu filtern.

6. Rasenmäher nach Anspruch 1, **dadurch gekennzeichnet, dass** er ein Fahrgestell (6) und einen Sitz (4) aufweist und dass der mindestens eine Behälter (50) unter dem Sitz angeordnet und so an dem Fahrgestell des Rasenmähertraktors befestigt ist, dass die Entnahmerichtung (DB) des mindestens eines Batteriepacks um einen vorgegebenen Winkel (a) in Bezug auf eine Achse (X) parallel zu der Drehachse der Räder (2) des Rasenmähertraktors geneigt ist.

7. Rasenmäher nach Anspruch 6, **dadurch gekennzeichnet, dass** der vorgegebene Winkel zwischen 5° und 45° beträgt.

8. Rasenmäher nach Anspruch 6, **dadurch gekennzeichnet, dass** der vorgegebene Winkel 10° beträgt.

9. Rasenmäher nach Anspruch 6, **dadurch gekennzeichnet, dass** der mindestens eine Behälter derart unter dem Sitz (4) angeordnet ist, dass er aus dem vertikalen Profil des Sitzes (4) austritt.

10. Rasenmäher nach Anspruch 6, **dadurch gekennzeichnet, dass** der mindestens eine Behälter in einem vorgegebenen Abstand (D) von dem Sitz (4) angeordnet ist, wobei der vorgegebene Abstand so bemessen ist, dass der Benutzer des Rasenmähertraktors das Batteriepack entnehmen kann, während er auf dem Traktorsitz sitzt.

## Revendications

1. Tondeuse à gazon comprenant au moins une lame de coupe d'herbe (3) déplacée par un moteur électrique (31) et un dispositif de traction comprenant un moteur électrique supplémentaire (21), ladite tondeuse à gazon comprenant en outre un dispositif d'alimentation (5) pour de tels moteurs électriques, comprenant au moins un bloc-batterie (55) et un appareil (100) pour refroidir ledit au moins un bloc-batterie, **caractérisée en ce que** ledit appareil de refroidissement comprend :
- au moins un support (52) pour ledit au moins un bloc-batterie comprenant un compartiment approprié pour un bloc-batterie, ledit compartiment comprenant une cavité (59) sur le fond non occupé par le bloc-batterie, lorsque le bloc-batterie est inséré dans le compartiment, ledit bloc-batterie comprenant des fentes (559) relatives sur le fond,
- au moins un contenant (50) pouvant recevoir au moins un support de bloc-batterie, ledit contenant étant fermé par une porte (56) comprenant des fentes (57) pour l'entrée d'air dans ledit support de bloc-batterie et le contenant,
- au moins un ventilateur (54) pour chaque support de bloc-batterie pouvant aspirer l'air par les fentes de ladite porte et afin de s'écouler à l'intérieur du bloc-batterie par ladite cavité et les fentes relatives au fond du bloc-batterie.

2. Tondeuse à gazon selon la revendication 1, **caractérisée en ce que** ledit au moins un support d'un bloc-batterie comprend une autre cavité (591) sur le dessus non occupé par le bloc-batterie, lorsque le bloc-batterie est inséré dans le support, ledit bloc-batterie comprenant des fentes (5991) relatives sur le dessus pour l'écoulement de l'air aspiré par ledit ventilateur à l'intérieur du bloc-batterie par ladite autre cavité et les fentes relatives sur le dessus du bloc-batterie.

3. Tondeuse à gazon selon la revendication 1, **caractérisée en ce que** ledit au moins un support d'un bloc-batterie comprend au moins une ouverture latérale (58), ledit au moins un support d'un bloc-batterie et ledit contenant formant un interstice entre eux, ledit interstice étant approprié pour transporter l'écoulement d'air (60) aspiré par ce ventilateur à ce bloc-batterie par ladite au moins une ouverture latérale.

4. Tondeuse à gazon selon la revendication 1, **caractérisée en ce que** ledit au moins un support d'un bloc-batterie comprend un gradin (521) dans les parois latérales du support (52) pouvant provoquer un décalage longitudinal des parois latérales afin de déterminer un plus petit compartiment arrière et un plus grand compartiment avant dans la direction d'entrée du bloc-batterie (55).

5. Tondeuse à gazon selon la revendication 1, **caractérisée en ce qu'**elle comprend un filtre (557) configuré pour filtrer l'air entrée par les fentes de ladite porte.

6. Tondeuse à gazon selon la revendication 1, **caractérisée en ce qu'**elle comprend un châssis (6) et un siège (4) et ledit au moins un contenant (50) étant placé au-dessous de ce siège et étant fixé au châssis du tracteur de tondeuse à gazon, de sorte que la direction d'extraction (DB) d'au moins un bloc-batterie est incliné à un angle donné (a) par rapport à un axe (X) parallèle à l'axe de rotation des roues (2) du tracteur de tondeuse à gazon.

7. Tondeuse à gazon selon la revendication 6, **caractérisée en ce que** ledit angle donné est compris entre 5° et 45°.

8. Tondeuse à gazon selon la revendication 6, **caractérisée en ce que** ledit angle donné est de 10°.

9. Tondeuse à gazon selon la revendication 6, **caractérisée en ce que** ledit au moins un contenant est placé au-dessous du siège (4) afin de s'échapper par le profil vertical du siège (4).

10. Tondeuse à gazon selon la revendication 6, **caractérisée en ce que** ledit au moins un contenant est placé à une distance donnée (D) du siège (4), ladite distance donnée étant telle qu'elle permet à l'utilisateur du tracteur de tondeuse à gazon de retirer le bloc-batterie tout en étant assis sur ledit siège de tracteur.
